# EUROPEAN PATENT APPLICATION

(11) **EP 2 793 447 A1**
(43) Date of publication of application: **22.10.2014**
(21) Application number: 13002013.4
(22) Date of filing: 17.04.2013
(51) Int. Cl.: H04L 29/08, H04W 4/04, G06F 21/60

(54) **Mobile framework for enabling interaction between a building and a visitor to the building**

(71) Applicant: ABB AG, 68309 Mannheim (DE)
(72) Inventor: Nädele, Martin, CH-8050 Zürich (CH)

(57) **Abstract**

The invention relates to a mobile framework (1) for enabling interaction between a building (2) and a visitor to the building, said framework (1) comprising a building management system (3) and a mobile communication device (4), whereby the communication device (4) has the capability to communicate with the building management system (3) in the building (2), whereby the communication device (4) is configured to run mobile-building-specific-interaction-apps (5), whereby the building management system (3) comprises enabling information (6) for running the mobile-building-specific-interaction-app (5) on the communication device (4), whereby the communication device (4) is configured to automatically communicate with the building management system (3) on entering the building (2) in order to download the enabling information (6) from the building management system (3) to the communication device (4).

## Description

The invention relates to a mobile framework for enabling interaction between a building and a visitor to the building.

There are various scenarios of building usage that can be enhanced by interaction between the user of a building and the building management system using mobile-building-specific-interaction- apps. A mobile application, or mobile app, is an application software designed to run on a mobile device such as a smartphone, a tablet computer or another mobile device. Mobile apps are usually available through application distribution platforms.

In the context of building management, a mobile-building-specific-interaction- app refers to an app that allows a user to perform certain building management tasks or information processing tasks related to the building with a mobile device such as a smartphone. Examples are apps for climate comfort, for elevator remote control, for event information, e.g. trade fair directories in trade fair exhibition hall, for building navigation information, e.g. on airports, for service schedule information, e.g. at air ports, trains stations etc., or others.

Visitors to a building use different mobile communication devices which have different mobile-platforms. For example mobile communication devices with an iPhone platform or with an Android platform may be used for running the mobile-building-specific-interaction- app for communicating of the visitor with the building management system.

For building visitors it may be regarded as inconvenient to know about, find and install a multitude of building and service specific applications, especially if they are only casual visitors of the building. Therefore, such applications are today used much less than they could be.

Today, for different mobile-platforms, e.g. iPhone platform, Android platform, the download processes and the usability of each mobile-building-specific-interaction-app is varying, which is complicated for the user.

Today, each of the building and service-specific and mobile-platform-specific apps require download processes that are individually initiated by the user, have different and individual security or permission settings, and show different user interfaces.

The objective of the present invention is to provide a mobile framework to allow the automatic installation of mobile-building-specific-interaction- apps to various kinds of mobile communication devices entering or approaching the building, showing a consistent Human Machine Interface.

According to the invention, the objective is achieved by a mobile framework for enabling interaction between a building and a visitor to the building, said framework comprising a building management system and a mobile communication device, whereby the communication device has the capability to communicate with the building management system in the building, whereby the communication device is configured to run mobile-building-specific-interaction-apps, whereby the building management system comprises enabling information for running the mobile-building-specific-interaction-app on the communication device, whereby the communication device is configured to automatically communicate with the building management system on entering the building in order to download the enabling information from the building management system to the communication device.

The solution according to the invention has the advantage to provide for the user on his mobile communication device a system of mobile-building-specific-interaction-apps with consistent look and feel across different buildings and services, which is automatically established when the user with his mobile communication device enters the building with the respective building management system or approaches it. For a building visitor it is therefore more simple and convenient to come in contact with and operate different mobile-building-specific-interaction- apps.

According to an advantageous aspect of the invention, the building management system comprises a facility communication system for running the communication procedure between the building management system and the communication device on the side of the building management system.

According to an advantageous aspect of the invention, the enabling information is the mobile-building-specific-interaction-app itself.

According to an advantageous aspect of the invention, the mobile-building-specific-interaction-app itself is pre-installed on the communication device, and the enabling information is configuration information for the mobile-building-specific-interaction-app.

According to an advantageous aspect of the invention, the communication device has a first mobile device app which is configured to automatically communicate with the building management system on entering the building in order to download the mobile-building-specific-interaction-app from the building management system.

According to an advantageous aspect of the invention, the building management system is configured to push the mobile-building-specific-interaction-app to the communication device.

According to an advantageous aspect of the invention, the first mobile device app is configured to pull the mobile-building-specific-interaction-app from the building management system to the communication device.

According to an advantageous aspect of the invention, the first mobile device app and the facility communication system are configured to communicate using a wireless local area network technique and respective communication protocols.

According to an advantageous aspect of the invention, the first mobile device app and the facility communication system are configured to communicate using Bluetooth technique and respective communication protocols.

According to an advantageous aspect of the invention, the first mobile device app and the facility communication system are configured to communicate using a short message service technique and respective communication protocols.

According to an advantageous aspect of the invention, the communication device comprises a framework application, whereby said framework application is configured to make the downloaded mobile-building-specific-interaction-app available to the user of the communication device without searching or navigation.

According to an advantageous aspect of the invention, the mobile-building-specific-interaction-app is written and transmitted in a platform-independent form, whereby the framework application is configured to interpret a received mobile-building-specific-interaction-app.

According to an advantageous aspect of the invention, the framework is configured for setting specific security or permission settings on the mobile communication device or the framework application on installation of the framework. The advantage is that the mobile-building-specific-interaction-apps all need only a certain superset of permissions, e.g. concerning the permission to communicate with the building management system, or give location information,) which is granted when installing the framework. Thus it can be installed without individual permission confirmation interactions.

According to an advantageous aspect of the invention, the mobile communication device is configured for the user of the mobile communication device to be able to further change certain security or permission settings of the mobile-building-specific-interaction-app. Advantage is that the user can restrict certain permissions further, e.g. concerning the location information, and the affected apps are automatically disabled or hidden.

If the user sets certain security settings on his mobile communication device or the framework application, e.g. not to publish location info, then those aspects on the mobile-building-specific-interaction- app that would need this information are automatically disabled or not even downloaded.

Additionally, it may be possible to show the user a message like for example "You can't use X, because of security setting Y", or the like.

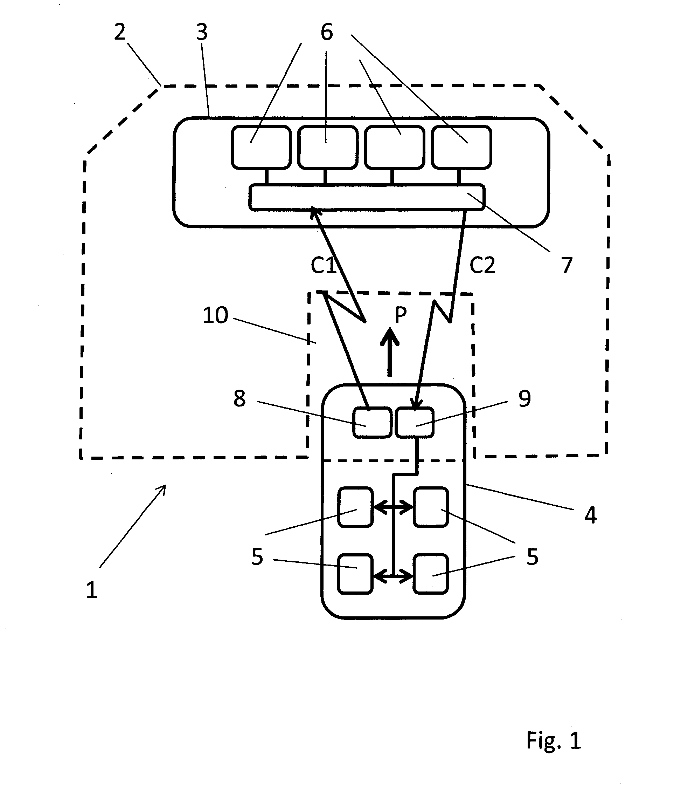

The invention will be described in greater detail by description of an embodiment with reference to the accompanying drawing, wherein
- Fig. 1: shows schematically a mobile framework according to the invention.

Figure 1 shows schematically a mobile framework 1, which comprises a building 2 and a mobile communication device 4. The mobile communication device 4 may be a smartphone, a tablet computer, glasses with computing and communication ability, or the like. The mobile communication device 4 usually is carried by a user person who is entering the building 2 through an entrance door 10, see arrow P, or who is entering into the range of the wireless access points of the building.

The building 2 has a building management system 3. The building management system 3 is performing various control and information processing tasks in the context of building operation, such as for example control of climate comfort, elevator remote control, lightning control, event information, e.g. trade fair directories in trade fair exhibition hall, building navigation information, e.g. on airports, for service schedule information, e.g. at air ports, trains stations etc., or others. Building management systems 3 in principle are known.

The building management system 3 has a facility communication system 7 which is a communications interface of the building management system 3 towards the world outside the building management system 3.

It is in principle also known that a user of a building can communicate and interact with the building management system using mobile-building-specific-interaction-apps 5 on a mobile communication device 4, whereby it is in principle known that a mobile application, or mobile app, is an application software designed to run on a mobile device such as a smartphone, a tablet computer or another mobile device. There are different operation system platforms available today for mobile communications, such as the iPhone platform or the Android platform. Building usage can thus be enhanced by interaction between the user and the building management system 3.

The building management system 3 has modules 6 that contain mobile-building-specific-interaction- apps, which on demand can be downloaded from the building management system 3 via the facility communication system 7 to the mobile communication device 4. The arrows C1 and C2 schematically represent the wireless communication links or communication channels that physically are used to transmit information between the building management system and the mobile communication device.

The modules 6 may as well contain enabling information for enabling the use of mobile-building-specific-interaction- apps 5 which are already pre-installed on the mobile communication device 4, and which are specifically adapted to the operation systems platform of the concerned mobile communication device 4. Such pre-installed mobile-building-specific-interaction- apps need building - specific information, which can be downloaded from the building management system 3 through the facility communication system 7.

Altogether, the framework 1 shown in figure 1 enables an interaction between the building 2 and a visitor to the building. The framework 1 comprises a building management system 3 and a mobile communication device 4. The communication device 4 has the capability to communicate with the building management system 3 in the building 2. The communication device 4 is configured to run mobile-building-specific-interaction-apps 5. The building management system 3 comprises modules with enabling information 6 for running the mobile-building-specific-interaction-app 5 on the communication device 4. The communication device 4 is configured to automatically communicate with the building management system 3 on entering the building 2 in order to download the enabling information 6 from the building management system 3 to the communication device 4).

The building management system 3 comprises a facility communication system 7 for running the communication procedure between the building management system 3 and the communication device 4 on the side of the building management system 3.

The enabling information 6 can also be the mobile-building-specific-interaction-app 5 itself.

The mobile-building-specific-interaction-app 5 itself can also be pre-installed on the communication device 4, and the enabling information 6 in such an embodiment is configuration information for the pre-installed mobile-building-specific-interaction-app 5.

The communication device 4 has a first mobile device app 8 which is configured to automatically communicate with the building management system 3, when the user enters the building with the mobile communication device, in order to download the mobile-building-specific-interaction-app 5 from the building management system 3.

The first mobile device app 8 is configured to push the building management system 3 to send the mobile-building-specific-interaction-app 5 to the communication device 4.

The first mobile device app 8 may be configured to pull the mobile-building-specific-interaction-app 5 from the building management system 3 to the communication device 4.

The first mobile device app 8 and the facility communication system 7 can be configured to communicate using a wireless local area network technique and respective communication protocols, or a technique generally known as WiFi technique.

The first mobile device app 8 and the facility communication system 7 may be configured to communicate using Bluetooth technique and respective communication protocols.

The first mobile device app 8 and the facility communication system 7 may be configured to communicate using a short message service technique and respective communication protocols.

The communication device 4 comprises a framework application program 9, whereby said framework application 9 is configured to make the downloaded mobile-building-specific-interaction-app 5 available to the user of the communication device 4 without searching or navigation.

The mobile-building-specific-interaction-app 5 is written and transmitted in a platform-independent form, whereby the framework application 9 is configured to interpret a received mobile-building-specific-interaction-app 5.

The framework 1 may be configured to add specific security or permission settings to the mobile-building-specific-interaction-app 5 on installation of the framework.

The communication device 4 may be configured for the user of the mobile communication device 4 to be able to further change certain security or permission settings of the mobile-building-specific-interaction-app 5.

### Reference List

- 1: Mobile-framework
- 2: building
- 3: building management system
- 4: mobile communication device
- 5: mobile-building-specific-interaction-app
- 6: enabling information
- 7: facility communication system
- 8: first mobile device app
- 9: framework application
- 10: entrance

## Claims

1. Mobile framework (1) for enabling interaction between a building (2) and a visitor to the building, said framework (1) comprising a building management system (3) and a mobile communication device (4), whereby the communication device (4) has the capability to communicate with the building management system (3) in the building (2), whereby the communication device (4) is configured to run mobile-building-specific-interaction-apps (5), whereby the building management system (3) comprises enabling information (6) for running the mobile-building-specific-interaction-app (5) on the communication device (4), whereby the communication device (4) is configured to automatically communicate with the building management system (3) on entering the building or its vicinity (2) in order to download the enabling information (6) from the building management system (3) to the communication device (4).

2. Mobile framework (1) according to claim 1, whereby the building management system (3) comprises a facility communication system (7) for running the communication procedure between the building management system (3) and the communication device (4) on the side of the building management system (3).

3. Mobile framework (1) according to claim 2, whereby the enabling information (6) is the mobile-building-specific-interaction-app (5) itself.

4. Mobile framework (1) according to claim 2, whereby the mobile-building-specific-interaction-app (5) itself is pre-installed on the communication device (4), and whereby the enabling information (6) is configuration information for the mobile-building-specific-interaction-app (5).

5. Mobile framework (1) according to claim 3, whereby the communication device (4) has a first mobile device app (8) which is configured to automatically communicate with the building management system (3) on entering the building (2) in order to download the mobile-building-specific-interaction-app (5) from the building management system (3).

6. Mobile framework (1) according to claim 5, whereby the building management system (3) is configured to push the mobile-building-specific-interaction-app (5) to the communication device (4).

7. Mobile framework (1) according to claim 5, whereby the first mobile device app (8) is configured to pull the mobile-building-specific-interaction-app (5) from the building management system (3) to the communication device (4).

8. Mobile framework (1) according to claim 5, whereby the first mobile device app (8) and the facility communication system (7) are configured to communicate using a wireless local area network technique and respective communication protocols.

9. Mobile framework (1) according to claim 5, whereby the first mobile device app (8) and the facility communication system (7) are configured to communicate using Bluetooth technique and respective communication protocols.

10. Mobile framework (1) according to claim 5, whereby the first mobile device app (8) and the facility communication system (7) are configured to communicate using a short message service technique and respective communication protocols.

11. Mobile framework (1) according to claim 5, whereby the communication device (4) comprises a framework application (9), whereby said framework application (9) is configured to make the downloaded mobile-building-specific-interaction-app (5) available to the user of the communication device (4) without searching or navigation.

12. Mobile framework (1) according to claim 11, whereby the mobile-building-specific-interaction-app (5) is written and transmitted in a platform-independent form, whereby the framework application (9) is configured to interpret a received mobile-building-specific-interaction-app (5).

13. Mobile framework (1) according to claim 5, whereby the framework (1) is configured for setting specific security or permission settings on the mobile communication device (4) or the framework application (9) on installation of the framework.

14. Mobile framework (1) according to claim 13, whereby the communication device (4) is configured for the user of the mobile communication device (4) to be able to further change certain security or permission settings.
